# FASCICULE DE BREVET EUROPEEN

(11) **EP 3 143 068 B1**
(45) Date de publication et mention de la délivrance du brevet: **02.05.2018**
(21) Numéro de dépôt: 15726235.3
(22) Date de dépôt: 05.05.2015
(51) Int. Cl.: C08G 63/181, C08G 63/42, C08G 63/78

(54) **POLYESTERS AROMATIQUES THERMOPLASTIQUES COMPRENANT DES MOTIFS TÉTRAHYDROFURANEDIMÉTHANOL ET ACIDE FURANEDICARBOXYLIQUE**
THERMOPLASTISCHE AROMATISCHE POLYESTER MIT TETRAHYDROFURAN-DIMETHANOL- UND FURANDICARBONSÄUREMOTIVEN
THERMOPLASTIC AROMATIC POLYESTERS COMPRISING TETRAHYDROFURAN-DIMETHANOL AND FURANDICARBOXYLIC ACID MOTIFS

(30) Priorité: 09.05.2014 FR 1454176
(43) Date de publication de la demande: 22.03.2017
(73) Titulaire: Roquette Frères, 62136 Lestrem (FR)
(72) Inventeur: JACQUEL, Nicolas, F-59130 Lambersart (FR); DEGAND, Gabriel, F-62120 Lambres (FR); SAINT-LOUP, René, F-59160 Lomme (FR)
(74) Mandataire: Cabinet Plasseraud
(86) Numéro de dépôt international: PCT/FR2015/051187
(87) Numéro de publication internationale: WO 2015/170050

(56) Documents cités:
- WO-A1-2012/005645
- WO-A1-2013/149222
- MOORE J A ET AL: "Polyesters derived from Furan and Tetrahydrofuran Nuclei", MACROMOLECULES, AMERICAN CHEMICAL SOCIETY, US, vol. 11, no. 3, 1 janvier 1978 (1978-01-01), pages 568-573, XP002413093, ISSN: 0024-9297, DOI: 10.1021/MA60063A028
- MÓNICA GOMES ET AL: "Synthesis and characterization of poly(2,5-furan dicarboxylate)s based on a variety of diols", JOURNAL OF POLYMER SCIENCE PART A: POLYMER CHEMISTRY, vol. 49, no. 17, 1 septembre 2011 (2011-09-01), pages 3759-3768, XP055044749, ISSN: 0887-624X, DOI: 10.1002/pola.24812

## Description

### Domaine de l'invention

La présente invention se rapporte à des polyesters thermoplastiques, comprenant des motifs tétrahydrofuranediméthanol, diol aliphatique et diacide aromatique. L'invention a également pour objet un procédé de fabrication dudit polyester et l'utilisation de ce polyester pour la fabrication de compositions et d'articles.

### Arrière-plan technologique de l'invention

Du fait de leurs nombreux avantages, les matières plastiques sont devenues incontournables pour la fabrication en série d'objets. En effet, du fait de leur caractère thermoplastique, on peut fabriquer à cadence élevée toute sorte d'objets à partir de ces matières plastiques.

Certains polyesters aromatiques sont thermoplastiques et ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de récipients, d'emballages ou encore de fibres textiles.

Par « motifs monomériques », on entend selon l'invention des motifs compris dans le polyester qui peuvent être obtenus après polymérisation d'un monomère. En ce qui concerne les motifs éthylène glycol et acide téréphtalique compris dans le PET, ils peuvent soit être obtenus par réaction d'estérification d'éthylène glycol et d'acide téréphtalique, soit par une réaction de transestérification d'éthylène glycol et d'ester d'acide téréphtalique.

Par ailleurs, le développement de polyesters issus de ressources biologiques renouvelables à court terme est devenu un impératif écologique et économique, face à l'épuisement et à la montée des prix des ressources fossiles telles que le pétrole. L'une des préoccupations importantes aujourd'hui dans le domaine des polyesters est donc de fournir des polyesters d'origine naturelle (biosourcés). Ainsi, des groupes comme Danone ou Coca-Cola commercialisent aujourd'hui des bouteilles de boisson en PET partiellement biosourcé, ce PET étant fabriqué à partir d'éthylène glycol biosourcé. Un inconvénient de ce PET est qu'il n'est que partiellement biosourcé, puisque l'acide téréphtalique est quant à lui issu de ressources fossiles.

Bien que des polyesters comprenant de l'acide téréphtalique biosourcé aient déjà été décrits, par exemple dans la demande WO 2013/034743 A1, les procédés de synthèse d'acide téréphtalique biosourcé ou d'ester d'acide téréphtalique biosourcé restent trop couteux à ce jour pour que le PET totalement biosourcé connaisse actuellement un succès commercial.

D'autres polyesters aromatiques, comprenant des motifs monomériques autres que des motifs acide téréphtalique, ont été fabriqués afin de substituer le PET.

Parmi les polyesters biosourcés, les polyesters aromatiques comprenant des motifs diol aliphatique et acide 2,5-furanedicarboxylique (FDCA), comme par exemple le polyéthylène-co-furanoate (PEF), constituent une alternative intéressante car ces polyesters présentent des propriétés mécaniques, optiques et thermiques proches de celles du PET. Cependant, ces polyesters à base de FDCA sont fabriqués à une température généralement plus faible que celle du PET. Ceci induit des difficultés à obtenir des PEF de masse molaire élevée.

La demande de brevet US 2011/0282020 A1 décrit un procédé de fabrication d'un polyester comprenant des motifs acide 2,5-furanedicarboxylique dans lequel on fait réagir :
▪ dans une première étape un ester d'acide 2,5-furanedicarboxylique avec un polyol en présence d'un catalyseur de transestérification comprenant du Sn(IV) pour former un prépolymère ;
▪ puis, à pression réduite dans une seconde étape, le prépolymère ainsi formé est polymérisé en présence d'un catalyseur de polycondensation comprenant du Sn(II) afin d'en augmenter la masse molaire et former le polyester.

Ce procédé permet de fabriquer des polyesters comprenant des motifs FDCA, et notamment de fabriquer du PEF, de plus haut poids molaire tout en conservant une faible coloration, cela sans nécessiter d'étape de purification après synthèse. Le polymère présente ainsi certaines propriétés améliorées, comme par exemple des propriétés mécaniques supérieures ou encore une viscosité supérieure, ce qui lui permet d'être utilisé pour les mêmes applications que celles du PET. Toutefois, un des problèmes du PEF, est qu'il est, comme le PET, semi-cristallin et présente une cristallinité qui reste élevée. Il présente ainsi des propriétés de transparence et de résistance au choc qui peuvent donc être insuffisantes.

Le document US 20130095268 décrit des polyesters comprenant des motifs acide 2,5-furanedicarboxylique et de cyclohexanediméthanol (CHDM), en particulier 1,4-cyclohexanediméthanol, utiles à la fabrication de fibres, films, bouteilles, revêtements ou feuilles. Il n'est pas indiqué si ces polyesters sont amorphes ou semi-cristallins. Par ailleurs, lorsque le polyester comprend en outre un motif diol aliphatique tel que l'éthylène glycol, sa température de transition vitreuse n'est pas, ou peu, modifiée quelle que soit la quantité de motifs CHDM dans la chaîne polymère. Ce document n'enseigne pas que ce polyester présente une masse molaire supérieure. Par ailleurs, la Demanderesse a pu constater que certains des polymères décrits dans ce document sont semi-cristallins.

La Demanderesse est parvenue à fabriquer un polyester au moins partiellement biosourcé et présentant des propriétés thermiques tout à fait satisfaisantes pour pouvoir être transformé par les techniques classiques des thermoplastiques. Ce polyester présente une faible cristallinité, voire est totalement amorphe. Il a également une température de transition vitreuse plus basse que le PEF, ce qui lui permet, de par sa nature peu ou non cristalline, d'être transformé à plus basse température que les polyesters à base de FDCA décrits précédemment.

### Résumé de l'invention

L'invention a ainsi pour objet un polyester thermoplastique comprenant:
▪ au moins un motif diol tétrahydrofuranediméthanol (THFDM) (A) ;
▪ au moins un motif acide furanedicarboxylique (B) ;
▪ au moins un motif diol aliphatique (C) autre que le diol (A).

Ce polyester présente des propriétés lui permettant d'être aisément transformé par les techniques de transformation des thermoplastiques. Les propriétés de tenue thermique ainsi que ses propriétés mécaniques lui permettent d'être utilisé pour la fabrication de tout type d'objet plastique.

Par ailleurs, ce polyester présente une masse molaire supérieure, par rapport à un polyester réalisé selon le même procédé et comprenant uniquement des motifs diol aliphatiques de type (C).

Ceci est très surprenant dans la mesure où les fonctions alcool du diol tétrahydrofuranediméthanol présentent un encombrement stérique important, généralement supérieur à celui des autres diols aliphatiques, et notamment supérieur à l'encombrement stérique des fonctions alcool d'un diol aliphatique linéaire tel que l'éthylène glycol.

Le document WO 2013/149222 décrit un polyester comprenant des motifs diol aliphatique et acide furanedicarboxylique. Par rapport à ce qui est décrit dans ce document, la Demanderesse a pu sélectionner des polyesters comprenant des motifs diol, des motifs acide aromatiques ainsi qu'un diol additionnel sélectionné de type tétrahydrofuranediméthanol (THFDM). Or, outre les avantages précédemment cités, le polyester selon l'invention présente une bonne stabilité thermomécanique à température ambiante, contrairement à des polyesters similaires comprenant dans des quantités molaires identiques (voire inférieures, comme il est démontré dans la partie exemples) du polytétraméthylèneglycol à la place du diol sélectionné.

### Brève description des Figures

La Figure 1 représente la température de transition vitreuse d'un polyester comprenant des motifs éthylène glycol, acide furanique et THFDM ou CHDM, en fonction de la quantité de THFDM ou de CHDM dans le polyester.
La Figure 2 représente le spectre RMN ¹H d'un poly(éthylène-co-isosorbide-co-tétrahydrofuranediméthanol furanoate).

### Description détaillée de l'invention

Ce polyester comprend au moins un motif tétrahydrofuranediméthanol (A), au moins un motif aromatique (B) particulier et au moins un diol aliphatique (C) autre que le diol (A).

Par « comprend au moins un motif (X) », on entend que le polyester peut comprendre différents types de motifs (X).

Ainsi, le motif tétrahydrofuranediméthanol (A) peut être un motif choisi parmi les motifs 2,5-tétrahydrofuranediméthanol, 2,4-tétrahydrofuranediméthanol, 2,3-tétrahydrofuranediméthanol et 3,4-tétrahydrofuranediméthanol ou un mélange de ces motifs.

Préférentiellement, il s'agit d'un motif 2,5-tétrahydrofuranediméthanol.

Le motif 2,5-tétrahydrofuranediméthanol est le motif suivant :

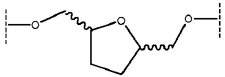

Le polyester peut également comprendre un mélange d'isomères des diols cités ci-dessus. Par exemple, en ce qui concerne le motif 2,5-tétrahydrofuranediméthanol, il peut être, selon sa conformation, sous les formes isomériques suivantes :

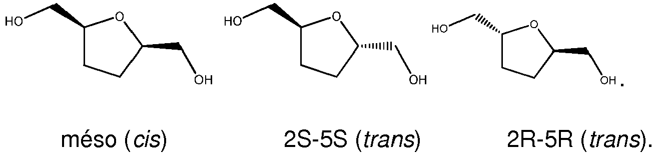

Lorsqu'il s'agit d'un mélange d'isomères, il peut s'agir d'un mélange présentant un ratio cis/trans allant de 1/99 à 99/1, par exemple de 90/10 à 99/1.

Le tétrahydrofuranediméthanol peut être obtenu par différentes voies réactionnelles. Il est de préférence obtenu au moins en partie à partir de ressources biosourcées. A titre d'exemple, le tétrahydrofuranediméthanol peut être obtenu à partir de diformylfurane tel que décrit dans la demande WO 2014/049275 au nom de la Demanderesse.

Le motif acide furanedicarboxylique (B) peut être un motif acide 2,5-furanedicarboxylique, un motif acide 2,4-furanedicarboxylique, un motif acide 2,3-furanedicarboxylique, un motif acide 3,4-furanedicarboxylique ou un mélange de ces motifs. De préférence, le motif acide furanedicarboxylique est le motif acide 2,5-furanedicarboxylique.

Plus précisément, par « motif acide 2,5-furanedicarboxylique », on désigne dans la présente demande un motif de formule : 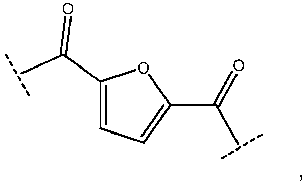 les pointillés désignant les liaisons par l'intermédiaire desquelles le motif est relié au reste du polyester, et ceci quel que soit le monomère utilisé pour former ledit motif.

L'acide furanedicarboxylique peut être biosourcé. Une voie d'obtention de l'acide furanedicarboxylique est l'oxydation de furanes disubstitués, par exemple le 5-hydroxyméthylfurfural.

Le polyester selon l'invention comprend au moins un motif (C) choisi parmi les diols aliphatiques autres que le diol (A).

Quelle que soit la variante, le polyester selon l'invention peut notamment comprendre, par rapport à la quantité totale de motifs diols (A) et (C) :
- de 1 à 99 motifs (A), avantageusement de 5 à 98 ;
- et de 1 à 99 motifs (C), avantageusement de 2 à 95.

Le motif diol aliphatique peut être au moins un motif choisi parmi les diols aliphatiques linéaires (C1), les diols cycloaliphatiques (C2), les diols aliphatiques ramifiés (C3), ou un mélanges de ces motifs.

Selon un premier mode de réalisation avantageux, le motif diol aliphatique (C) est un motif diol aliphatique linéaire (C1) ou un mélange de ces motifs.

Le motif diol aliphatique linéaire (C1) présente la forme suivante : 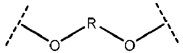 dans lequel le groupement R est un groupement aliphatique linéaire, les pointillés désignant les liaisons par l'intermédiaire desquelles le motif est relié au reste du polyester, et ceci quel que soit le monomère utilisé pour former ledit motif. De préférence, le groupement R est un groupement aliphatique saturé.

Le diol (C1) est préférentiellement choisi parmi l'éthylène glycol, 1,3-propanediol, 1,4-butanediol, 1,5-pentanediol, 1,6-hexanediol, 1,8-octanediol, 1,10-decanediol, ou un mélange de motifs diols aliphatiques comprenant au moins l'un de ces motifs, préférentiellement l'éthylène glycol et le 1,4-butanediol, très préférentiellement l'éthylène glycol. Les polyesters selon l'invention comprenant des diols (C1) choisis parmi l'éthylène glycol et le 1,4-butanediol sont particulièrement préférés car ils ne posent pas de problème de toxicité, contrairement à ceux à base de 1,3-propanediol qui peuvent comprendre de l'acroléine résiduelle. De plus, ces deux diols préférés sont très disponibles industriellement. On préfère notamment l'éthylène glycol en tant que diol (C1) du fait de la température de transition vitreuse plus importante du polyester obtenu à partir de celui-ci en comparaison avec les polyesters obtenus à partir des autres diols (C1).

Selon ce premier mode, le polyester selon l'invention comprend avantageusement, par rapport à la quantité totale de motifs diols (A) et (C1) :
- de 1 à 99 motifs (A), avantageusement de 5 à 90, préférentiellement de 10 à 80, par exemple de 20 à 75 ;
- et de 1 à 99 motifs (C1), avantageusement de 10 à 95, préférentiellement de 20 à 90, par exemple de 25 à 80.

Selon un deuxième mode de réalisation avantageux, le motif diol aliphatique (C) est au moins un motif diol cycloaliphatique (C2) ou un mélange de ces motifs.

Selon ce deuxième mode, le polyester selon l'invention comprend avantageusement, par rapport à la quantité totale de motifs diols (A) et (C2) :
- de 1 à 99 motifs (A), avantageusement de 5 à 98, préférentiellement de 80 à 95 ;
- et de 1 à 99 motifs (C2), avantageusement de 2 à 95, préférentiellement de 5 à 20.

Selon une première sous-variante, le motif (C2) est choisi parmi les motifs suivants : 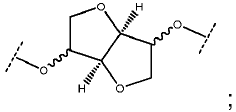 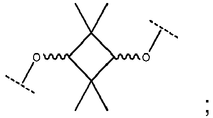 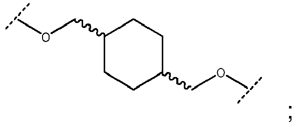 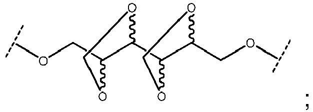 et 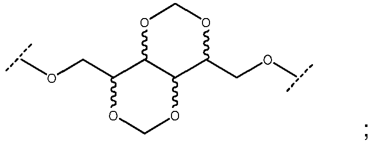 ou un mélange de ces motifs.

Avantageusement, (C2) est un motif 1 : 4, 3 : 6 dianhydrohexitol choisi parmi : 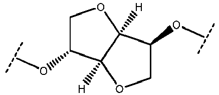 isosorbide ; 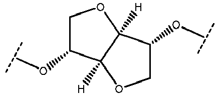 isomannide ; 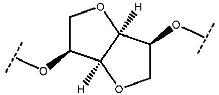 isoidide ;
ou un mélange de ces motifs.

Il s'agit préférentiellement d'un motif :

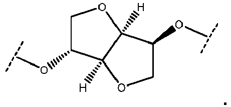

L'isosorbide, l'isomannide et l'isoidide peuvent ainsi être obtenus respectivement par déshydratation de sorbitol, de mannitol et d'iditol.

La synthèse de ces dianhydrohexitols est bien connue : différentes voies sont décrites par exemple dans les articles de Fletcher et al. (1,4,3,6-Hexitol dianhydride, I-isoidide, J Am Chem Soc, 1945, 67:1042-3 *ainsi que* 1,4,3,6-Dianhydro-I-iditol and the structure of isomannide and isosorbide, J Am Chem Soc, 1946, 68:939-41*),* de Montgomery et al. (Anhydrides of polyhydric alcohols. IV. Constitution of dianhydrosorbitol, J Chem Soc, 1946, 390-3 *&* Anhydrides of polyhydric alcohols. IX. Derivatives of 1,4-anhydrosorbitol from 1,4,3,6-dianhydrosorbitol, J Chem Soc, 1948, 237-41*),* de Fleche et al. (Isosorbide. Preparation, properties and chemistry, Starch/Staerke 1986, 38:26-30*),* de Fukuoka et al. (Catalytic conversion of cellulose into sugar Alcohols, Angew Chem Int Ed, 2006, 45:5161-3*),* dans le brevet US 3,023,223.

Le motif (C2) peut également être un motif cyclobutanediol, par exemple tétraméthylcyclobutanediol, notamment un motif choisi parmi : 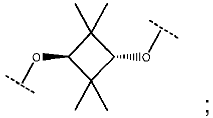 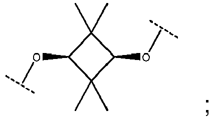 ou un mélange de ces motifs.

Le motif (C2) peut également être un motif cyclohexanedimethanol, notamment un motif choisi parmi les motifs 1,4-cyclohexanedimethanol, 1,2-cyclohexanedimethanol et 1,3-cyclohexanedimethanol ou un mélange de ces diols et d'isomères de ces diols. Ces diols peuvent être en configuration cis ou trans. Par exemple, dans le cas d'un motif 1,4-cyclohexanedimethanol, ce sont des motifs : 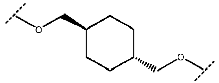 pour la configuration cis ; 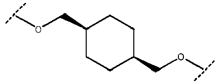 pour la configuration trans.

Le motif (C2) peut être également choisi parmi : 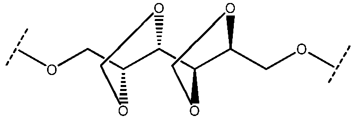 2,3:4,5-di-O-methylene-galactitol 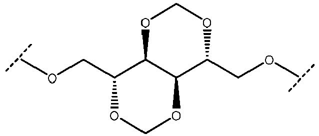 2,4:3,5-di-O-methylene-D-mannitol ; 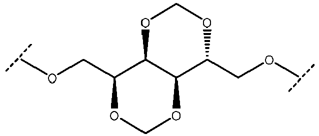 2,4:3,5-di-O-methylene-D-glucitol;
ou un mélange de ces motifs.

Le 2,3:4,5-di-O-methylene-galactitol peut quant à lui être obtenu par acétalisation puis réduction de l'acide galactarique, comme décrit par Lavilla et al. dans Bio-based poly(butylene terephthalate) copolyesters containing bicyclic diacetalized galactitol and galactaric acid: Influence of composition on properties, Polymer, 2012, 53(16), 3432-3445*.* Le 2,4:3,5-di-O-methylene-D-mannitol peut quant à lui être obtenu par acétalisation du D-mannitol par le formaldéhyde, comme décrit par Lavilla et al. dans Bio-Based Aromatic Polyesters from a Novel Bicyclic Diol Derived from D-Mannitol, Macromolecules, 2012, 45, 8257-8266*.*

Selon l'invention, le polyester peut comprendre des mélanges de motifs (C2) tels que décrits dans les deux sous-variantes précédentes.

Selon un troisième mode de réalisation avantageux, le motif diol aliphatique (C) est un mélange d'au moins un diol aliphatique linéaire (C1) et d'au moins un motif diol cycloaliphatique (C2).

Les diols (C1) et (C2) peuvent être choisis parmi ceux listés précédemment.

Le polyester selon l'invention comprend avantageusement, par rapport à la quantité totale de motifs diols (A) et (C) :
- de 1 à 98 motifs (A), avantageusement de 5 à 95, préférentiellement de 15 à 90 ;
- de 1 à 98 motifs (C1), avantageusement de 2 à 60, préférentiellement de 4 à 50 ;
- et de 1 à 98 motifs (C2), avantageusement de 2 à 60, préférentiellement de 5 à 40.

Dans le cas où le polyester comprend des motifs (C3), le motif diol aliphatique ramifié présente la forme suivante : 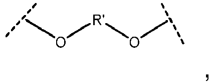 dans lequel le groupement R' est un groupement aliphatique ramifié, les pointillés désignant les liaisons par l'intermédiaire desquelles le motif est relié au reste du polyester, et ceci quel que soit le monomère utilisé pour former ledit motif. De préférence, le groupement R' est un groupement saturé.

Le polyester selon l'invention peut comprendre des motifs monomériques additionnels autres que les motifs (A), (B) et (C). De préférence, la quantité de motifs monomériques additionnels est, par rapport à la somme totale des motifs du polyester, inférieure à 30%, tout préférentiellement inférieure à 10%. Le polyester selon l'invention peut être exempt de motif monomérique additionnel.

Les motifs monomériques additionnels peuvent notamment être des motifs diéther tels que des motifs diéthylène glycol. Ces motifs diéther peuvent provenir de co-produits du procédé de polymérisation, c'est-à-dire qu'ils peuvent provenir par exemple d'une réaction d'étherification entre deux glycols. Pour limiter cette réaction d'éthérification, il est possible d'ajouter dans le réacteur une base limitant ce phénomène, ladite base pouvant être l'acétate de sodium, l'hydroxyde de sodium, l'hydroxyde de tétraméthylammonium, l'hydroxyde de tétraéthylammonium ou un mélange de ces bases. De préférence, la quantité de motifs diéther est, par rapport à la somme totale des motifs du polyester, inférieure à 10%. Le polyester selon l'invention peut être exempt de motif diéther.

Les motifs monomériques additionnels peuvent également être des motifs diacide additionnels autres que les motifs aromatiques (B). A titre d'exemple, ces motifs peuvent être des motifs diacide aliphatique saturé. Comme motif diacide aliphatique cyclique saturé, on peut citer le motif acide 1,4 cyclohexanedioïque. Avantageusement, le motif diacide aliphatique est un motif diacide aliphatique saturé linéaire. Ces motifs peuvent être choisis parmi les motifs acide succinique, acide glutarique, acide adipique, acide pimélique, acide subérique, acide azélaïque, acide sébacique ou un mélange de ces diacides. De préférence, le diacide aliphatique est choisi parmi l'acide succinique et l'acide adipique, tout préférentiellement l'acide succinique. De préférence, la quantité de motifs diacide additionnel est, par rapport à la somme totale des motifs du polyester, inférieure à 30%, tout préférentiellement inférieure à 10%. Le polyester selon l'invention peut être exempt de motif diacide additionnel.

Les motifs monomériques additionnels peuvent être également des motifs hydroxyacide. A titre d'exemple, les motifs hydroxyacide peuvent être des motifs acide glycolique, acide lactique, acide hydroxybutyrique, acide hydroxycaproique, acide hydroxyvalérique, acide 7-hydroxyheptanoïque, acide 8-hydroxyoctanoïque, acide 9-hydroxynonanoïque, acide hydroxyméthylfurancarboxylique, acide hydroxybenzoïque ou un mélange de ces hydroxyacides. En ce qui concerne ces motifs hydroxyacide, ils sont susceptibles d'être obtenus à partir d'un hydroxyacide ou d'une dilactone telle que le glycolide ou le lactide. De préférence, la quantité de motifs hydroxyacide est, par rapport à la somme totale des motifs du polyester inférieure à 10%. Le polyester selon l'invention peut être exempt de motif hydroxyacide.

Le polyester selon l'invention peut également comprendre des motifs allongeur de chaîne. Par motif « allongeur de chaîne », on entend un motif susceptible d'être obtenu par un monomère comprenant deux fonctions autres que les fonctions hydroxyle, acide carboxylique et ester d'acide carboxylique, et susceptible de réagir avec ces mêmes fonctions. Les fonctions peuvent être des fonctions isocyanate, isocyanurate, caprolactame, caprolactone, carbonate, époxy, oxazoline et imide, lesdites fonctions pouvant être identiques ou différentes. A titre d'allongeurs de chaînes utilisables dans la présente invention, on peut citer :
- les diisocyanates, de préférence le méthylènediphényl-diisocyanate (MDI), l'isophorone-diisocyanate (IPDI), le dicyclohexylméthane-diisocyanate (H12MDI), le toluène-diisocyanate (TDI), le naphthalène-diisocyanate (NDI), l'hexaméthylène-diisocyanate (HMDI) ou la lysine-diisocyanate (LDI), le diisocyanate aliphatique de masse molaire 600 g/mol obtenu à partir de dimères de diacide gras (DDI®1410 Diisocyanate),
- les dimères, trimères et tetramères de diisocyanates,
- les prépolymères dits « isocyanate-free » résultant d'une réaction d'un diol ou d'une amine sur un diisocyanate dans des conditions telles que le prépolymère contienne une fonction isocyanate à chacune de ses extrémités (polymère α,ω-fonctionnel ou téléchélique) sans que du diisocyanate libre ne puisse être détecté,
- les dialkylcarbonates, notamment les dialkylcarbonates de dianhydrohexitols, et en particulier les dialkylcarbonates d'isosorbide,
- les dicarbamoylcaprolactames, de préférence le 1,1'-carbonyl-bis-caprolactame, les dicarbamoylcaprolactones,
- les diépoxydes,
- les composés comportant une fonction époxyde et une fonction halogénure, de préférence l'épichlorhydrine,
- les composés hétérocycliques, de préférence les bis-oxazolines, les bis-oxazolin-5-ones et les bis-azalactones,
- les dérivés de diesters méthyléniques ou éthyléniques, de préférence les dérivés de carbonates de méthyle ou d'éthyle,
- les mélanges quelconques d'au moins deux quelconques des produits précités.

De préférence, la quantité de motifs allongeur de chaîne est, par rapport à la somme totale des motifs du polyester, inférieure à 10%. Le polyester selon l'invention peut être exempt de motif allongeur de chaîne.

Les motifs monomériques peuvent également être des motifs polyfonctionnels. Par « motif polyfonctionnel », on appelle un motif pouvant être obtenu par réaction d'un comonomère susceptible de réagir avec les fonctions hydroxyde et/ou acide carboxylique et/ou ester d'acide carboxylique et dont la fonctionnalité est supérieure à 2. Les fonctions réactives de ces agents de branchement peuvent être des fonctions hydroxyde, acide carboxylique, anhydride, isocyanate, isocyanurate, caprolactame, caprolactone, carbonate, époxy, oxazoline et imide, lesdites fonctions pouvant être identiques ou différentes, de préférence acide carboxylique, hydroxyde, époxyde ou isocyanate, tout préférentiellement acide carboxylique ou hydroxyde. La fonctionnalité de ces agents de branchements peut être de 3 à 6, de préférence de 3 à 4. Parmi les agents de branchements classiquement utilisés on peut citer : l'acide malique, l'acide citrique ou isocitrique, l'acide tartrique, l'acide trimesique, l'acide tricarballylique, l'acide cyclopentane tétracarboxylique, l'anhydride trimellitique, le mono ou dianhydride pyromellitique, le glycérol, le pentaérythritol, le dipentaérythritol, le monoanhydrosorbitol, le monoanhydromannitol, les huiles époxydées, l'acide dihydroxystéarique, le triméthylolpropane, des éthers de ces polyols comme par exemple le propoxylate de glycérol (commercialisé sous le nom de Voranol 450 par Dow Chemical), des polymères présentant des fonctions époxydes latérales, les triisocyanates, les tétraisocyanates ainsi que les homopolymères respectifs des di-, tri- et tétraisocyanates existants, les polyanhydrides, les alcoxysilanes, de préférence le tétraéthoxysilane.
De préférence, la quantité de motifs polyfonctionnels est, par rapport à la somme totale des motifs du polyester, inférieure à 10%. Le polyester selon l'invention peut être exempt de motif polyfonctionnel.

Selon un autre mode de l'invention, le polyester selon l'invention comprend, par rapport à la quantité totale des motifs :
- de 5 à 55 % de motifs (A) ;
- de 40 à 60 % de motifs (B) ;
- de 1 à 50 % de motifs (C) ;
- de 0 à 10% de motifs diéther ;
- de 0 à 30% de motifs diacide additionnel autre que (B), préférentiellement de 0 à 10% ;
- de 0 à 10% de motifs hydroxyacide ;
- de 0 à 10% de motifs allongeur de chaîne ;
- de 0 à 10% de motifs polyfonctionnels.

Le polyester selon l'invention peut être partiellement biosourcé, voire totalement biosourcé. En d'autres termes, il est obtenu, en partie ou en totalité, à partir de monomères au moins partiellement biosourcés.

Le polyester peut être un copolymère statistique ou un copolymère à blocs.

De préférence, le polyester selon l'invention présente un ratio molaire de motifs (B)/((A)+(C)) allant de 60/40 à 40/60, avantageusement de 55/45 à 45/55.

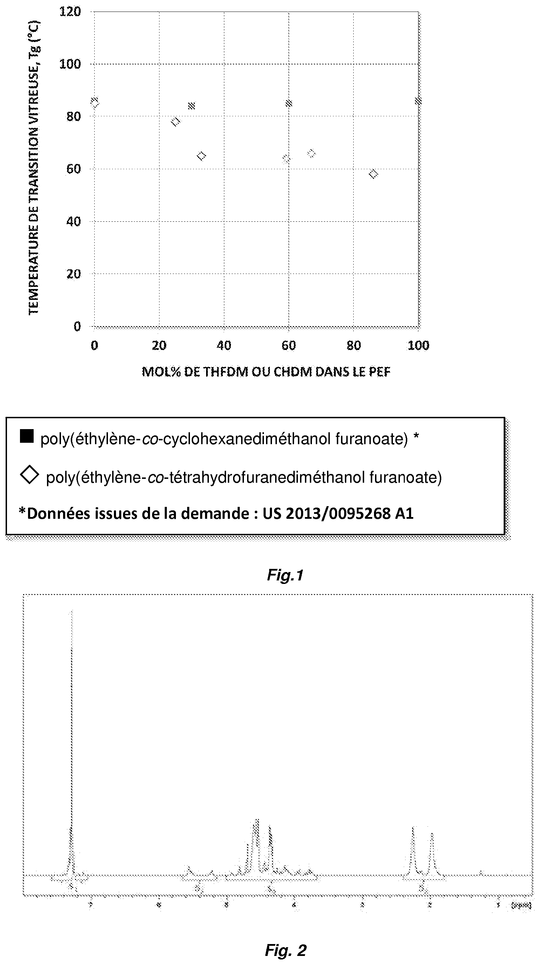

Les quantités en différents motifs dans le polyester peuvent être déterminées par RMN ¹H. L'homme de l'art peut aisément trouver les conditions d'analyse pour déterminer les quantités en chaque motif du polyester. La Figure 2 présente le spectre RMN du poly(éthylène-co-isosorbide-co-tétrahydrofuranediméthanol furanoate). Les déplacements chimiques relatifs à l'éthylène glycol sont compris entre 4,4 et 5,0 ppm, les déplacements chimiques relatifs au cycle furanique sont compris entre 7,2 et 7,5 ppm, les déplacements chimiques relatifs au tétrahydrofuranediméthanol sont compris entre 3,6 et 5,0 ppm et entre 1,8 et 2,4 ppm et les déplacements chimiques relatifs à l'isosorbide sont vers 4,2 ppm, 4,8 ppm, 5,2 ppm et 5,6 ppm. L'intégration de chaque signal permet de déterminer la quantité en chaque motif du polyester.

De préférence, le polyester selon l'invention présente une masse molaire moyenne en poids supérieure à 7500 g/mol, de préférence supérieure à 10000 g/mol, tout préférentiellement supérieure à 20000 g/mol.

La masse molaire du polyester peut être déterminée par les méthodes classiques, comme par exemple par chromatographie d'exclusion stérique (SEC) dans un mélange de chloroforme et d'1,1,1,3,3,3-Hexafluoro-2-propanol dans un ratio volumique 98/2. La détection du signal peut alors être effectuée par un réfractomètre différentiel calibré avec des étalons de polyméthacrylate de méthyle.

Avantageusement, la température de transition vitreuse du polymère selon l'invention est supérieure ou égale à 50°C, de préférence supérieure ou égale à 55°C, voire supérieure à ou égale 60°C. Ceci permet d'utiliser le dit polymère pour former de nombreux types d'objets présentant une tenue thermique suffisante pour pouvoir être utilisés dans de nombreuses applications. La température de transition vitreuse du polyester peut être mesurée par les méthodes classiques, notamment en utilisant la calorimétrie différentielle à balayage (DSC) en utilisant une vitesse de chauffe de 10K/min. Le protocole expérimental est détaillé dans la partie exemples ci-après.

Avantageusement, le polyester selon l'invention présente une température de transition vitreuse inférieure ou égale à 85°C, avantageusement inférieure ou égale à 80°C, de préférence inférieure ou égale à 75°C. Ceci permet de transformer le polymère à plus basse température qu'un PEF, voire d'un PEFg.

Le polyester objet de la présente invention peut être semi-cristallin ou amorphe. Avantageusement, le polyester présente un degré de cristallinité un degré de cristallinité inférieur à 50%, préférentiellement inférieur à 35%. On peut déterminer la cristallinité du polyester par DSC en chauffant un échantillon de 10 à 280°C (10K/min) puis refroidissant à 10°C (10K/min). De préférence, le polyester selon l'invention est amorphe; en d'autres termes sa cristallinité est nulle. Dans ce cas, il présente une résistance au choc et des propriétés optiques améliorées, ceci sans nécessiter l'utilisation de modifiant choc spécifique ou d'agent clarifiant.

L'invention porte également sur un procédé de fabrication de polyester thermoplastique qui comprend :
- une étape d'introduction dans un réacteur de monomères comprenant au moins un diol tétrahydrofuranediméthanol (A), au moins acide furanedicarboxylique (B) et/ou un diester de cet acide et au moins un diol aliphatique (C) autre que le diol (A) et ;
- une étape de polymérisation des monomères pour former le polyester comprenant :
   ▪ un premier stade pendant laquelle le milieu réactionnel est agité à une température allant de 140 à 210°C afin de former des oligomères ;
   ▪ un second stade pendant laquelle les oligomères formés sont agités sous vide à une température allant de 200 à 275°C afin de former le polyester ;
- une étape de récupération du polyester à l'issue de l'étape de polymérisation.

En utilisant ce procédé, il est possible d'obtenir un polyester présentant une température de transition vitreuse suffisante pour pouvoir être utilisé comme matière plastique pour la fabrication de tout type d'objets.

Pour réaliser le procédé selon l'invention, on peut utiliser les différents monomères cités précédemment.

En ce qui concerne les monomères introduits dans le réacteur, ils peuvent être introduits en une fois ou en plusieurs fois dans le réacteur, sous la forme d'un mélange ou séparément.

Les diols (A) et (C) utiles au procédé de l'invention ont été décrits ci-dessus dans les parties motifs de polyester correspondants.

En ce qui concerne les motifs diacide, y compris les motifs (B), ils peuvent être obtenus à partir du diacide mais il est également possible de remplacer ce diacide par des monomères différant uniquement en ce que la fonction acide carboxylique du monomère est substituée par une fonction ester d'acide carboxylique. Dans ce cas, on utilise de préférence en tant que précurseur du motif B, les diesters alkyliques d'acide furanedicarboxylique, et notamment les diesters alkyliques d'acide 2,5-furanedicarboxylique. Encore plus préférentiellement les diesters de méthyle ou d'éthyle, tout préférentiellement de méthyle, soit le 2,5-diméthylfuranoate.

En ce qui concerne les motifs monomériques additionnels, ils peuvent être obtenus à partir des monomères cités comme motifs du polyester. Dans le cas de motifs porteurs de fonctions acide, ils peuvent être obtenus par des monomères différant uniquement des monomères cités en ce que la fonction acide carboxylique du monomère est substituée par une fonction ester d'acide carboxylique ou éventuellement, lorsque ces monomères existent, par une fonction anhydride.

De préférence, par rapport à la totalité des moles de monomères (A), (B) et (C) introduits dans le réacteur, le pourcentage molaire d'acide et/ou de diester (B) va de 25 à 45%.

En effet, dans le procédé selon l'invention, on préfère utiliser un excès de diol afin de réaliser la synthèse du polyester. Cela permet d'accélérer la réaction et également d'augmenter la masse molaire finale du polyester ainsi formé.

L'Homme du métier saura ajuster les quantités de diol (A) et (C) introduites dans le réacteur afin d'obtenir les proportions respectives dans les différents diols des polyesters selon l'invention décrits précédemment. Par exemple, par rapport à la totalité des moles de diol (A) et (C), au moins 1% en moles et au plus 99% en moles sont constitués de diol (A), avantageusement de 5 à 98%

De préférence, la température lors du premier stade de polymérisation va de 150 à 200 °C. De préférence, ce premier stade se fait en atmosphère de gaz inerte, ce gaz pouvant notamment être du diazote. Ce premier stade peut se faire sous flux de gaz. Il peut également se faire sous pression, par exemple à une pression comprise entre 1,05 et 8 bar. De préférence, lorsque le monomère (B) est de type acide, la pression va de 3 à 8 bar. De préférence, lorsque le monomère (B) est de type ester, la pression va de 1,05 à 3 bar.

Préalablement au premier stade, une étape de désoxygénation du réacteur est préférentiellement réalisée. Elle peut se faire par exemple en réalisant le vide dans le réacteur puis en introduisant un gaz inerte tel que l'azote dans le réacteur. Ce cycle vide-introduction de gaz inerte peut être répétés à plusieurs reprises, par exemple de 3 à 5 fois. De préférence, ce cycle vide-azote est réalisé à une température entre 60 et 80°C afin que les réactifs, et notamment les diols bicycliques, soient totalement fondus. Cette étape de désoxygénation présente l'avantage d'améliorer les propriétés de coloration du polyester obtenu à la fin du procédé.

Le second stade de polymérisation se fait sous vide, de préférence à une pression inférieure à 10 mbar, tout préférentiellement inférieure à 1 mbar.

De préférence, la température lors du second stade de polymérisation va de de 220 à 270 °C.

Selon l'invention, le premier stade de l'étape de polymérisation a de préférence une durée allant de 1 à 5 heures. Avantageusement, le second stade a une durée allant de 2 à 6 heures.

Le procédé selon l'invention comprend une étape de polymérisation en présence d'un catalyseur.

On utilise avantageusement lors de ce stade un catalyseur de transestérification. Ce catalyseur de transestérification peut être choisi parmi les dérivés d'étain, préférentiellement les dérivés d'étain (IV), de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemples de tels composés, on peut citer ceux donnés dans la demande US 2011282020A1 aux paragraphes [0026] à [0029], et à la page 5 de la demande WO 2013/062408 A1.

De préférence, on utilise lors du premier stade de transestérification un dérivé d'étain IV, un dérivé de titane, un dérivé de zinc, ou un dérivé de manganèse.

En fin de transesterification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphényle ou les phosphite des tris(nonylephényle) ou ceux cités au paragraphe [0034] de la demande US 2011282020A1.

Le second stade de polymérisation (polycondensation) peut optionnellement être réalisé avec l'ajout d'un catalyseur supplémentaire. Ce catalyseur est avantageusement choisi parmi les dérivés d'étain, préférentiellement d'étain (II), de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. A titre d'exemple de tels composés, on peut citer ceux donnés dans le brevet EP 1882712 B1 aux paragraphes [0090] à [0094].

De préférence, le catalyseur est un dérivé d'étain (II), de titane, de germanium ou d'antimoine.

Tout préférentiellement, on utilise lors du premier stade et du second stade de polymérisation un catalyseur à base de titane.

Le polyester récupéré lors de la dernière étape du procédé présente avantageusement les caractéristiques précédemment données.

Le procédé selon l'invention comprend une étape de récupération du polyester à l'issue de l'étape de polymérisation. On peut récupérer le polyester en l'extrayant du réacteur sous forme d'un jonc de polymère fondu. Ce jonc peut être transformé en granulés en utilisant les techniques classiques de granulation.

Le procédé selon l'invention peut également comprendre, après l'étape de récupération du polyester, une étape de polymérisation à l'état solide.

L'invention a également pour objet un polyester susceptible d'être obtenu selon le procédé de l'invention.

L'invention porte également sur une composition comprenant outre le polyester selon l'invention, au moins un additif ou un polymère additionnel ou un mélange de ceux-ci.

Ainsi, la composition selon l'invention peut également comprendre comme additif des charges ou des fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz. La composition peut comprendre de 0,1 à 75% en masse charges et/ou fibres par rapport au poids total de la composition, par exemple de 0,5 à 50%. La composition peut également être de type composite, c'est-à-dire comprendre de grandes quantités de ces charges et/ou fibres.

L'additif utile à la composition selon l'invention peut également comprendre des agents opacifiants, des colorants et des pigments. Ils peuvent être choisis parmi l'acétate de cobalt et les composés suivants : HS-325 Sandoplast® RED BB (qui est un composé porteur d'une fonction azo également connu sous le nom Solvent Red 195), HS-510 Sandoplast® Blue 2B qui est une anthraquinone, Polysynthren® Blue R, et Clariant® RSB Violet.

La composition peut également comprendre comme additif un agent de procédé, ou *processing aid,* pour diminuer la pression dans l'outil de mise en oeuvre. Un agent de démoulage permettant de réduire l'adhésion aux matériels de mise en forme du polyester, tels que les moules ou les cylindres de calandreuses peut également être utilisé. Ces agents peuvent être sélectionnés parmi les esters et les amides d'acide gras, les sels métalliques, les savons, les paraffines ou les cires hydrocarbonées. Des exemples particuliers de ces agents sont le stéarate de zinc, le stéarate de calcium, le stéarate d'aluminium, les stéaramide, les érucamide, les béhénamide, les cires d'abeille ou de *candelilla.*

La composition selon l'invention peut comprendre également d'autres additifs tels que les agents stabilisants, par exemple les agents stabilisants lumière, les agents stabilisants UV et les agents stabilisants thermique, les agents fluidifiant, les agents retardateurs de flamme et les agents antistatiques. Elle peut également comprendre des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076. L'antioxydant secondaire peut être des composés phosphorés trivalents tels que Ultranox® 626, Doverphos® S-9228, Hostanox® P-EPQ, ou l'Irgafos® 168.

La composition peut comprendre en outre un polymère additionnel, différent du polyester selon l'invention. Ce polymère peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

La composition peut également comprendre comme polymère additionnel un polymère permettant d'améliorer les propriétés au choc du polymère, notamment les polyoléfines fonctionnelles telles que les polymères et copolymères d'éthylène ou de propylène fonctionnalisés, des copolymères coeur-écorce ou des copolymères à bloc.

Les compositions selon l'invention peuvent également comprendre des polymères d'origine naturelle, tels que l'amidon, la cellulose, les chitosans, les alginates, les protéines telles que le gluten, les protéines de pois, la caséine, le collagène, la gélatine, la lignine, ces polymères d'origine naturelle pouvant ou non être modifiés physiquement ou chimiquement. L'amidon peut être utilisé sous forme déstructurée ou plastifiée. Dans le dernier cas, le plastifiant peut être de l'eau ou un polyol, notamment le glycérol, le polyglycérol, l'isosorbide, les sorbitans, le sorbitol, le mannitol ou encore de l'urée. Pour préparer la composition, on peut notamment utiliser le procédé décrit dans le document WO 2010/010282 A1.

La composition selon l'invention peut être fabriquée par les méthodes classiques de transformation des thermoplastiques. Ces méthodes classiques comprennent au moins une étape de mélange à l'état fondu ou ramolli des polymères et une étape de récupération de la composition. On peut réaliser ce procédé dans des mélangeurs internes à pales ou à rotors, des mélangeurs externes, des extrudeuses mono-vis, bi-vis co-rotatives ou contrarotatives. Toutefois, on préfère réaliser ce mélange par extrusion, notamment en utilisant une extrudeuse co-rotative.

Le mélange des constituants de la composition peut se faire sous atmosphère inerte.

Dans le cas d'une extrudeuse, on peut introduire les différents constituants de la composition à l'aide de trémies d'introduction situées le long de l'extrudeuse.

L'invention porte également sur un article comprenant le polyester ou la composition selon l'invention.

Cet article peut être de tout type et être obtenu en utilisant les techniques classiques de transformation.

Il peut s'agir par exemple de fibres ou de fils utiles à l'industrie textile ou d'autres industries. Ces fibres ou fils peuvent être tissés pour former des tissus ou encore des non-tissés.

L'article selon l'invention peut également être un film, une feuille. Ces films ou feuilles peuvent être fabriqués par les techniques de calandrage, d'extrusion film cast, d'extrusion soufflage de gaine.

L'article selon l'invention peut aussi être un récipient pour transporter des gaz, des liquides ou/et des solides. Il peut s'agir de biberons, de gourdes, de bouteilles, par exemple de bouteilles d'eau gazeuse ou non, de bouteilles de jus, de bouteilles de soda, de bombonnes, de bouteilles de boissons alcoolisées, de flacons, par exemple de flacons de médicament, de flacons de produits cosmétiques, des plats, par exemple pour plats cuisinés, de plats pour micro-ondes ou encore de couvercles. Ces récipients peuvent être de toute taille. Ils peuvent être fabriqués par extrusion soufflage, thermoformage ou injection soufflage.

Ces articles peuvent également être des articles optiques, c'est-à-dire des articles nécessitant de bonnes propriétés optiques tels que des lentilles, des disques, des panneaux transparents ou translucides, des fibres optiques, des films pour les écrans LCD ou encore des vitres. Ces articles optiques présentent l'avantage de pouvoir être placés à proximité de sources de lumière et donc de chaleur, tout en conservant une excellente stabilité dimensionnelle et une bonne tenue à la lumière.

Les articles peuvent également être des articles multicouches, dont au moins une couche comprend le polymère ou la composition selon l'invention. Ces articles peuvent être fabriqués par un procédé comprenant une étape de co-extrusion dans le cas où les matériaux des différentes couches sont mis en contact à l'état fondu. A titre d'exemple, on peut citer les techniques de co-extrusion de tube, co-extrusion de profilé, de co-extrusion soufflage (en anglais « blowmolding ») de bouteille, de flacon ou de réservoir, généralement regroupés sous le terme de co-extrusion soufflage de corps creux, co-extrusion gonflage appelée également soufflage de gaine (en anglais « film blowing ») et co-extrusion à plat (« en anglais « cast coextrusion »).

Ils peuvent également être fabriqués selon un procédé comprenant une étape d'application d'une couche de polyester à l'état fondu sur une couche à base de polymère organique, de métal ou de composition adhésive à l'état solide. Cette étape peut être réalisée par pressage, par surmoulage, stratification ou laminage (en anglais « lamination »), extrusion-laminage, couchage (en anglais « coating »), extrusion-couchage ou enduction.

L'invention va maintenant être illustrée dans les exemples ci-après. Il est précisé que ces exemples ne limitent en rien la présente invention.

### Exemples

### Réactifs

Pour les exemples illustratifs présentés ci-dessous les réactifs suivants ont été utilisés :

### Monomère A :

2,5-tétrahydrofuranediméthanol (THFDM) (pureté 99,6%). Obtenu par hydrogénation du 2,5-furanediméthanol (95%, Pennakem) sur Ni de Raney à 110°C et 70 bars, puis purification par distillation.

### Monomère B : précurseur du motif « B » :

2,5-diméthylfuranoate (pureté> 99%) de Satachem

### Monomère (C) :

Ethylène glycol (pureté >99,8%) de Sigma-Aldrich
Isosorbide (pureté >99,5%) Polysorb® P de Roquette Frères
2,2,4,4-tétraméthyl-1,3-cyclobutanediol (pureté >98%) de Chemical Point, ratio cis / trans = 50 / 50

### Autres monomères :

1,4-cyclohexanediméthanol (CHDM) :ratio cis/trans : 30/70 (pureté> 99%) de Sigma Aldrich PTMEG : polytétraméthylèneglycol de Sigma Aldrich, 1000 g/mol

### Catalyseurs :

Isopropoxyde de titane (>99,99%) de Sigma Aldrich
Tétrabutoxyde de titane (>97%) de Sigma Aldrich

### Techniques analytiques

### RMN

L'analyse ¹H RMN des échantillons de polyesters a été réalisée à l'aide d'un spectromètre Brucker 400MHz muni d'une sonde QNP. Préalablement à l'analyse 15mg de l'échantillon de polyester a été dissous dans 0,6mL de chloroforme deuteré (CDCl₃) et 0,1 mL d'acide tétrafluoro acétique (*d1*-TFA). L'intégration des pics correspondant aux différents motifs a notamment permis le calcul des ratios A/C et A/C1/C2 donnés dans les tableaux 1 et 2.

### Chromatographie d'exclusion stérique

La masse molaire du polymère a été évaluée par chromatographie d'exclusion stérique (SEC) dans un mélange de chloroforme et de 1,1,1,3,3,3-hexafluoro-2-propanol (98:2 vol%). Les échantillons de polyester ont été dissous à une concentration de 1 g.L⁻¹, puis ont été élués à un débit de 0,75 mL.min⁻¹. L'acquisition des signaux a été réalisée à l'aide d'un détecteur réfractomètrique (Agilent-RI-1100a) et les masses molaires moyennes en poids (Mw) ont par la suite été évaluées à l'aide d'étalons polyméthylméthacrylate (PMMA).

### DSC

Les propriétés thermiques des polyesters ont été mesurées par calorimétrie différentielle à balayage (DSC) : L'échantillon est tout d'abord chauffé de 10 à 280°C (10°C.min⁻¹), refroidit à 10°C (10°C.min⁻¹) puis réchauffé à 280°C dans les mêmes conditions que la première étape. La transition vitreuse a été prise au point médian (en anglais *mid-point*) du second chauffage.

### Préparation et caractérisation de polyesters thermoplastiques

Dans les protocoles qui suivent, les parts en réactifs sont données en proportions massiques.

### Exemple suivant l'invention (Ex. 1) :

Dans un réacteur sont introduits 50 parts de diméthylfuranoate, 28,65 parts d'éthylène glycol, 10,92 parts de tétrahydrofuranediméthanol et 4,2 parts d'une solution d'isopropoxyde de titane dans le toluène (1% en masse d'isopropoxyde de titane). Le mélange est agité par agitation mécanique à 150 tr/min et est placé dans un four chauffé à 180°C en 15 min sous flux d'azote. Toujours sous flux d'azote, le four est ensuite maintenu à 180°C pendant 1h avant d'être à nouveau chauffé à 210°C en 1h. Cette température est maintenue pendant 2h afin d'éliminer le maximum de méthanol.

Suite à cela la température du four est montée à 260°C, la pression est réduite en 90min à 0,7mbar et la vitesse d'agitation est réduite à 50 tr/min. Ces conditions sont maintenues pendant 3h.

Les caractéristiques du polymère formé sont reportées dans le Tableau 1 ci-dessous.

### Exemple suivant l'invention (Ex. 2)

Dans un réacteur sont introduits 50 parts de diméthylfuranoate, 30 parts d'éthylène glycol, 11 parts de tétrahydrofuranediméthanol et 4,5 parts d'une solution d'isopropoxyde de titane dans le toluène (1% en masse d'isopropoxyde de titane). Le mélange est agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 1 ci-dessous.

### Exemple suivant l'invention (Ex. 3) :

Dans un réacteur sont introduits 50 parts de diméthylfuranoate, 23 parts d'éthylène glycol, 23,3 parts de tétrahydrofuranediméthanol et 4,3 parts d'une solution d'isopropoxyde de titane dans le toluène (1% en masse d'isopropoxyde de titane). Le mélange agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 1 ci-dessous.

### Exemple suivant l'invention (Ex. 4)

Dans un réacteur sont introduits 50,1 parts de diméthylfuranoate, 20 parts d'éthylène glycol, 28,7 parts de tétrahydrofuranediméthanol et 4,4 parts d'une solution d'isopropoxyde de titane dans le toluène (1% en masse d'isopropoxyde de titane). Le mélange agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 1 ci-dessous.

### Exemple suivant l'invention (Ex. 5)

Dans un réacteur sont introduits 49,8 parts de diméthylfuranoate, 13,2 parts d'éthylène glycol, 44 parts de tétrahydrofuranediméthanol et 4,8 parts d'une solution d'isopropoxyde de titane dans le toluène (1% en masse d'isopropoxyde de titane). Le mélange agité par barreau aimanté et est chauffé à 160°C en 30 min sous flux d'azote. Toujours sous flux d'azote, le mélange est ensuite maintenu à 160°C pendant 1h avant d'être à nouveau chauffé à 190°C en 30 min. Cette température est maintenue pendant 2h afin d'éliminer le maximum de méthanol.

Suite à cela la température du réacteur est montée à 240°C, la pression est réduite en 90min à 0,7 mbar sous agitation magnétique. Ces conditions seront maintenues pendant 3h.

Les caractéristiques du polymère formé sont reportées dans le Tableau 1 ci-dessous.

### Exemple comparatif (CP1)

Dans un réacteur sont introduits 49,9 parts de diméthylfuranoate, 33,7 parts d'éthylène glycol, et 4,6 parts d'une solution d'isopropoxyde de titane dans le toluène (1% en masse d'isopropoxyde de titane). Le mélange agité par barreau aimanté et est chauffé à 160°C en 30 min sous flux d'azote. Toujours sous flux d'azote, le mélange est ensuite maintenu à 160°C pendant 1h avant d'être à nouveau chauffé à 190°C en 30 min. Cette température est maintenue pendant 2h afin d'éliminer le maximum de méthanol.

Suite à cela la température du réacteur est montée à 240°C, la pression est réduite en 90min à 0,7 mbar sous agitation magnétique. Ces conditions sont maintenues pendant 3h.

Les caractéristiques du polymère formé sont reportées dans le Tableau 1 ci-dessous.

### Exemple comparatif (CP2)

Dans un réacteur sont introduits 50 parts de diméthylfuranoate, 23,6 parts d'éthylène glycol, 23,6 parts de cyclohexanediméthanol et 8,42 parts d'une solution de tétrabutoxyde de titane dans le toluène (1% en masse de tétrabutoxyde de titane). Le mélange est agité par agitation mécanique à 150 tr/min et est placé dans un four chauffé à 160°C en 15 min sous flux d'azote. Toujours sous flux d'azote, le four est ensuite maintenu à 160°C pendant 1h avant d'être à nouveau chauffé à 190°C en 1 heure. Cette température est maintenue pendant 2h afin d'éliminer le maximum de méthanol.

Suite à cela la température du four est montée à 260°C, la pression est réduite en 90 min à 0,7 mbar et la vitesse d'agitation est réduite à 50 tr/min. Ces conditions sont maintenues pendant 3h.

Les caractéristiques du polymère formé sont reportées dans le Tableau 1 ci-dessous.

### Exemple comparatif (CP3)

Dans un réacteur sont introduits 50 parts de diméthylfuranoate, 28 parts d'éthylène glycol, 110 parts de polytétraméthylèneglycol et une solution d'isopropoxyde de titane dans le toluène. Le mélange est agité par agitation mécanique à 150 tr/min et est placé dans un four chauffé à 180°C en 15 min sous flux d'azote. Toujours sous flux d'azote, le four est ensuite maintenu à 180°C pendant 1h avant d'être à nouveau chauffé à 210°C en 1h. Cette température est maintenue pendant 2h afin d'éliminer le maximum de méthanol.

Suite à cela la température du four est montée à 260°C, la pression est réduite en 90min à 0,7mbar et la vitesse d'agitation est réduite à 50 tr/min. Ces conditions sont maintenues pendant 3h.

Les caractéristiques du polymère formé sont reportées dans le Tableau 1 ci-dessous.

**Tableau 1 : Propriétés des polyesters selon l'invention et comparatifs : effet du tétrahydrofurane sur des polyesters de type poly(éthylène-co-tétrahydrofuranediméthanol furanoate)**

| Ex. | Tf (°C) (ou amorphe) | Tc (°C) (ou amorphe) | Tg (°C) | A ou CHDM ou PTMEG/C (mol/mol) | Mw (g/mol) |
|---|---|---|---|---|---|
| 1 | Amorphe | Amorphe | 78 | 24,5/75,5 | 22350 |
| 2 | Amorphe | Amorphe | 64,8 | 32,5/67,5 | 44000 |
| 3 | Amorphe | Amorphe | 64,2 | 59,3/40,7 | 52150 |
| 4 | Amorphe | Amorphe | 65,6 | 66,9/33,1 | 103850 |
| 5 | Amorphe | Amorphe | 58,4 | 86,1/14,9 | 128250 |
| CP1 | 218 | 176 | 85 | 0/100 | 18450 |
| CP2 | 208 | 175 | 76 | 62,4(CHDM)/37,6 | 83850 |
| CP3 | NM (semi-cristallin) | NM (semi-cristallin) | < -15°C | 6(PTMEG)/94 | 11100 |

| | | | | | |
|---|---|---|---|---|---|
| NM : non mesuré | | | | | |

Les essais montrent que :
- l'utilisation de diols de type THFDM a permis d'augmenter la masse molaire du polyester obtenu. (cf CP1 et CP3 vs Ex 1 à 5 ou CP 2 vs Ex4)
- A quantité comparable de monomère cycloaliphatique, le polyester selon l'invention présente une température de transition vitreuse moins élevée, ce qui lui permet de pouvoir être transformé à plus basse température. Cette température de transition vitreuse est plus faible que celle du PET mais, le polyester selon l'invention reste tout à fait satisfaisant pour de nombreuses applications

La Demanderesse a également synthétisé à l'exemple comparatif 3 un polyester comprenant du PTMEG comme le polyester décrit à l'exemple 4 de la demande WO 2013149222. Si l'on compare le polyester de l'exemple 1 avec celui de l'exemple comparatif 3, on remarque que la température de transition vitreuse du polyester selon l'invention est bien plus élevée. Et ceci alors même que la proportion molaire de diol autre que le diol linéaire est bien plus faible pour le polyester comparatif comprenant du PTMEG que pour le polyester selon l'invention qui comprend du THFDM (6% pour le PTMEG contre 24,5% pour le THFDM). De plus, le polyester comparatif est semi-cristallin.

En comparaison, les polyesters des exemples selon l'invention présentent tous une température de transition vitreuse bien supérieure à 25°C et donc une stabilité thermomécanique à température ambiante améliorée par rapport à celle des mêmes polyesters comprenant du PTMEG en lieu et place de THFDM.

De plus, contrairement à l'ensemble des exemples de polyesters selon l'invention qui sont amorphes, certains polyesters comprenant des motifs acide furanedicarboxylique et cylohexanediméthanol (CHDM) sont semi-cristallins ; il est donc nécessaire de transformer ces derniers à une température dépassant sa température de fusion. Il en est de même des polyesters décrits dans la demande WO 2013149222.

### Exemple suivant l'invention (Ex. 6)

Dans un réacteur sont introduits 49,7 parts de diméthylfuranoate, 12,7 parts d'éthylène glycol, 36,8 parts de tétrahydrofuranediméthanol, 9,9 parts d'isosorbide et 5,4 parts d'une solution d'isopropoxyde de titane dans le toluène (1% en masse d'isopropoxyde de titane). Le mélange agité par barreau aimanté et est chauffé à 160°C en 30 min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-dessous.

### Exemple suivant l'invention (Ex. 7)

Dans un réacteur sont introduits 50 parts de diméthylfuranoate, 12,8 parts d'éthylène glycol, 36,4 parts de tétrahydrofuranediméthanol, 9,5 parts d'isosorbide, et 7,1 parts d'une solution d'isopropoxyde de titane dans le toluène (1% en masse d'isopropoxyde de titane). Le mélange est agité par agitation mécanique à 150 tr/min et placé dans un four chauffé à 180°C en 15min sous flux d'azote. Toujours sous flux d'azote, le four est ensuite maintenu à 180°C pendant 1h avant d'être à nouveau chauffé à 210°C en 1h. Cette température est maintenue pendant 2h afin d'éliminer le maximum de méthanol.

Suite à cela la température du four est montée à 260°C, la pression est réduite en 90min à 0,7mbar et la vitesse d'agitation est réduite à 50 tr/min. Ces conditions sont maintenues pendant 3h.

Les caractéristiques du polymère formé sont reportées dans le Tableau 2 ci-dessous.

### Exemple suivant l'invention (Ex. 8)

Dans un réacteur sont introduits 50,1 parts de diméthylfuranoate, 9,8 parts d'éthylène glycol, 43 parts de tétrahydrofuranediméthanol, 13,8 parts d'isosorbide et 5,2 parts d'une solution d'isopropoxyde de titane dans le toluène (1% d'isopropoxyde de titane). Le mélange agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-dessous.

### Exemple suivant l'invention (Ex. 9)

Dans un réacteur sont introduits 50 parts de diméthylfuranoate, 17,1 parts d'éthylène glycol, 7,7 parts de tétrahydrofuranediméthanol, 31,3 parts d'isosorbide et 5 parts d'une solution d'isopropoxyde de titane dans le toluène (1% d'isopropoxyde de titane). Le mélange agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-dessous.

### Exemple suivant l'invention (Ex. 10)

Dans un réacteur sont introduits 50,2 parts de diméthylfuranoate, 58,5 parts de tétrahydrofuranediméthanol, 16,6 parts d'isosorbide et 5,6 parts d'une solution d'isopropoxyde de titane dans le toluène (1% d'isopropoxyde de titane). Le mélange agité par barreau aimanté et est chauffé à 160°C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-dessous.

### Exemple suivant l'invention (Ex. 11)

Dans un réacteur sont introduits 50,2 parts de diméthylfuranoate, 35,6 parts de tétrahydrofuranediméthanol, 8,9 parts de tétramethylcyclobutanediol, 10,3 parts d'éthylène glycol et 5,7 parts d'une solution d'isopropoxyde de titane dans le toluène (1% d'isopropoxyde de titane). Le mélange agité par barreau aimanté et est chauffé à 160 °C en 30min sous flux d'azote. Toujours sous flux d'azote, le mélange est ensuite maintenu à 160°C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-dessous.

### Exemple suivant l'invention (Ex. 12)

Dans un réacteur sont introduits 49,9 parts de diméthylfuranoate, 44,9 parts de tétrahydrofuranediméthanol, 32,3 parts de tétramethylcyclobutanediol, 6,3 parts d'une solution d'isopropoxyde de titane dans le toluène (1% d'isopropoxyde de titane). Le mélange est agité par barreau aimanté et est chauffé à 160 °C en 30min sous flux d'azote. Toujours sous flux d'azote, le mélange est ensuite maintenu à 160 °C pendant 1h avant d'être à nouveau chauffé à 190°C en 30min. Cette température est maintenue pendant 2h afin d'éliminer le maximum de méthanol.

Suite à cela la température du réacteur est montée à 240°C, la pression est réduite en 90min à 0,7mbar sous agitation magnétique. Ces conditions sont maintenues pendant 3h.

Les caractéristiques du polymère formé sont reportées dans le Tableau 2 ci-après.

**Tableau 2 : Propriétés de polyesters selon l'invention comprenant différents motifs diols aliphatiques cycliques (C2)**

| Exemples | Nature diol aliphatique cyclique C2 | Tg (°C) | A/C1/C2 (mol/mol/mol) | Mw (g/mol) |
|---|---|---|---|---|
| 6 | isosorbide | 61,2 | 73,2/19,7/7,1 | 46700 |
| 7 | isosorbide | 64 | 72,5/18,5/9 | 52500 |
| 8 | isosorbide | 58,1 | 77,1/15/7,1 | 45400 |
| 9 | isosorbide | 83,6 | 19,6/48,6/31,8 | 20400 |
| 10 | isosorbide | 60 | 88,1/0/11,9 | 142300 |
| 11 | tétramethylcyclobutanediol | 50 | 88,1/5/6,9 | 18750 |
| 12 | tétramethylcyclobutanediol | 54 | 87,9/0/12,1 | 18700 |

Tous les polymères selon l'invention sont amorphes. De plus, ces essais montrent qu'il est également possible de moduler la température de transition vitreuse en ajoutant d'autres monomères dans le polyester, et notamment d'autres monomères de type diol cycloaliphatique autres que le tétrahydrofuranediméthanol.

## Revendications

1. Polyester thermoplastique comprenant:
▪ au moins un motif diol tétrahydrofuranediméthanol (A) ;
▪ au moins un motif acide furanedicarboxylique (B) ;
▪ au moins un motif diol aliphatique (C) autre que le diol (A).

2. Polyester selon la revendication précédente, **caractérisé en ce qu'**il présente un degré de cristallinité inférieur à 50%, avantageusement inférieur à %35, le degré de cristallinité étant déterminé comme indiqué dans la description.

3. Polyester selon l'une des revendications précédentes, **caractérisé en ce qu'**il présente une masse molaire moyenne en poids supérieure à 7500 g/mol, de préférence supérieure à 10000 g/mol, tout préférentiellement supérieure à 20000 g/mol, la masse molaire moyenne en poids étant déterminée comme indiqué dans la description.

4. Polyester selon l'une des revendications précédentes, **caractérisé en ce que** le motif diol aliphatique (C) est au moins un motif choisi parmi les diols aliphatiques linéaires (C1), les diols cycloaliphatiques (C2), les diols aliphatiques ramifiés (C3), ou un mélange de ces motifs.

5. Polyester selon la revendication 4, **caractérisé en ce que** le motif diol aliphatique (C) est un motif diol aliphatique linéaire (C1) ou un mélange de ces motifs (C1).

6. Polyester selon la revendication 4, **caractérisé en ce que** le motif diol aliphatique (C) est un motif diol cycloaliphatique (C2) ou un mélange de ces motifs (C2).

7. Polyester selon la revendication 4, **caractérisé en ce que** le motif diol aliphatique (C) comprend au moins un mélange d'au moins un motif diol aliphatique linéaire (C1) et d'au moins un motif diol cycloaliphatique (C2).

8. Polyester selon l'une des revendications 4, 5 ou 7 **caractérisé en ce qu'**il comprend au moins un motif diol aliphatique linéaire (C1) choisi parmi l'éthylène glycol, 1,3-propanediol, 1,4-butanediol, 1,5-pentanediol, 1,6-hexanediol, 1,8-octanediol, 1,10-decanediol, ou un mélange de motifs diols aliphatiques comprenant au moins l'un de ces motifs.

9. Polyester selon l'une des revendications 4, 5 ou 7 **caractérisé en ce qu'**il comprend au moins un motif diol aliphatique linéaire (C1) choisi parmi l'éthylène glycol et le 1,4-butanediol, très préférentiellement l'éthylène glycol.

10. Polyester selon l'une des revendications 4, 6 ou 7, **caractérisé en ce que** le motif diol cycloaliphatique (C2) comprend au moins un motif choisi parmi les motifs suivants : 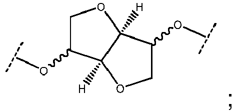 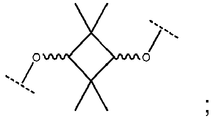 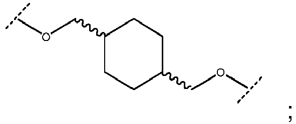 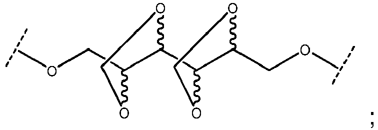 et

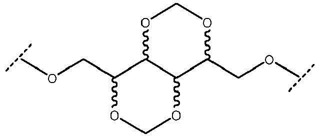

11. Polyester selon la revendication 10, **caractérisé en ce que** le motif diol cycloaliphatique (C2) comprend au moins un motif choisi parmi les motifs suivants : 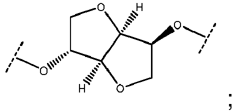 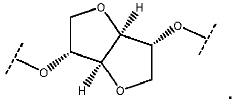 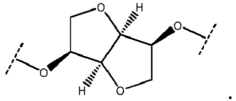 préférentiellement un motif :

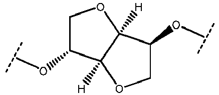

12. Polyester selon l'une des revendications précédentes **caractérisé en ce que** la température de transition vitreuse est supérieure ou égale à 50°C, de préférence supérieure ou égale à 60°C, la température de transition vitreuse étant déterminée comme indiqué dans la description.

13. Procédé de fabrication de polyester thermoplastique **caractérisé en ce qu'**il comprend :
• une étape d'introduction dans un réacteur de monomères comprenant au moins un diol tétrahydrofuranediméthanol (A), au moins un acide furanedicarboxylique (B) et/ou un diester de cet acide et au moins un diol aliphatique (C) autre que le diol (A) et ;
• une étape de polymérisation des monomères pour former le polyester comprenant :
▪ un premier stade pendant laquelle le milieu réactionnel est agité à une température allant de 140 à 210°C afin de former des oligomères ;
▪ un second stade pendant laquelle les oligomères formés sont agités sous vide à une température allant de 200 à 275°C afin de former le polyester ;
• une étape de récupération du polyester à l'issue de l'étape de polymérisation.

14. Procédé selon la revendication précédente **caractérisé en ce que**, par rapport à la totalité des moles de monomères (A), (B) et (C) introduits dans le réacteur, le pourcentage molaire d'acide et/ou de diester (B) d'acide va de 25 à 45%.

15. Polyester susceptible d'être obtenu selon le procédé d'une des revendications 13 à 14.

## Patentansprüche

1. Thermoplastisches Polyester, umfassend:
* wenigstens eine Tetrahydrofurandimethanol-Diol-Einheit (A),
* wenigstens eine Furandicarbonsäure-Einheit (B),
* wenigstens eine von dem Diol (A) verschiedene aliphatische Diol-Einheit (C).

2. Polyester nach dem vorhergehenden Anspruch, **dadurch gekennzeichnet, dass** er einen Kristallinitätsgrad kleiner 50% aufweist, vorteilhafterweise kleiner 35%,
wobei der Kristallinitätsgrad wie in der Beschreibung erläutert bestimmt wird.

3. Polyester nach einem der vorhergehenden Ansprüche, **dadurch gekennzeichnet, dass** er ein Gewichtsmittel-Molekulargewicht größer 7500 g/mol, bevorzugt größer 10000 g/mol, besonders bevorzugt größer 20000 g/mol aufweist,
wobei das Gewichtsmittel-Molekulargewicht wie in der Beschreibung erläutert bestimmt wird.

4. Polyester nach einem der vorhergehenden Ansprüche, **dadurch gekennzeichnet, dass** die aliphatische Diol-Einheit (C) wenigstens eine Einheit ist, die gewählt ist aus linearen aliphatischen Diolen (C1), cycloaliphatischen Diolen (C2), verzweigten aliphatischen Diolen (C3) oder einer Mischung dieser Einheiten.

5. Polyester nach Anspruch 4, **dadurch gekennzeichnet, dass** die aliphatische Diol-Einheit (C) eine lineare aliphatische Diol-Einheit (C1) ist oder eine Mischung dieser Einheiten (C1).

6. Polyester nach Anspruch 4, **dadurch gekennzeichnet, dass** die aliphatische Diol-Einheit (C) eine cycloaliphatische Diol-Einheit (C2) ist oder eine Mischung dieser Einheiten (C2).

7. Polyester nach Anspruch 4, **dadurch gekennzeichnet, dass** die aliphatische Diol-Einheit (C) wenigstens eine Mischung aus wenigstens einer linearen aliphatischen Diol-Einheit (C1) und wenigstens einer cycloaliphatischen Diol-Einheit (C2) umfasst.

8. Polyester nach einem der Ansprüche 4, 5 oder 7, **dadurch gekennzeichnet, dass** er wenigstens eine lineare aliphatische Diol-Einheit (C1) umfasst, die gewählt ist aus Ethylenglycol, 1,3-Propandiol; 1,4-Butandiol; 1,5-Pentandiol; 1,6-Hexandiol; 1,8-Octandiol; 1,10-Decandiol oder einer Mischung aliphatischer Diol-Einheiten, welche wenigstens eine dieser Einheiten umfassen.

9. Polyester nach einem der Ansprüche 4, 5 oder 7, **dadurch gekennzeichnet, dass** er wenigstens eine lineare aliphatische Diol-Einheit (C1) umfasst, die gewählt ist aus Ethylenglycol und 1,4-Butandiol, stark bevorzugt Ethylenglycol.

10. Polyester nach einem der Ansprüche 4, 6 oder 7, **dadurch gekennzeichnet, dass** die cycloaliphatische Diol-Einheit (C2) wenigstens eine Einheit umfasst, die aus den folgenden Einheiten gewählt ist: 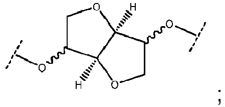 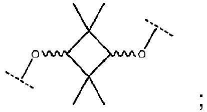 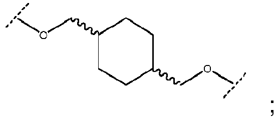 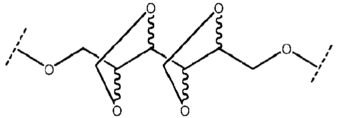 und

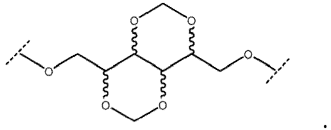

11. Polyester nach Anspruch 10, **dadurch gekennzeichnet, dass** die cycloaliphatische Diol-Einheit (C2) wenigstens eine Einheit umfasst, die aus den folgenden Einheiten gewählt ist: 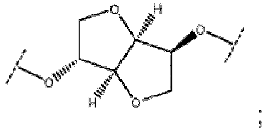 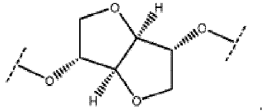 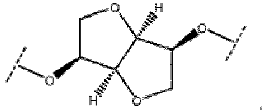 bevorzugt eine Einheit:

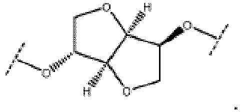

12. Polyester nach einem der vorhergehenden Ansprüche, **dadurch gekennzeichnet, dass** die Glasübergangstemperatur größer oder gleich 50 °C ist, bevorzugt größer oder gleich 60 °C, wobei die Glasübergangstemperatur wie in der Beschreibung erläutert bestimmt wird.

13. Verfahren zur Herstellung von thermoplastischem Polyester, **dadurch gekennzeichnet, dass** es umfasst:
* einen Schritt der Einführung in einen Monomer-Reaktor, welcher wenigstens ein Tetrahydrofurandimethanol (A), wenigstens eine Furandicarbonsäure (B) und/oder ein Diester dieser Säure und wenigstens ein von dem Diol (A) verschiedenes aliphatisches Diol (C) umfasst, und:
* einen Schritt der Polymerisation der Monomere zur Bildung des Polyesters, umfassend:
- ein erstes Stadium, in dem das Reaktionsmedium bei einer Temperatur von 140 bis 210 °C geschüttelt wird, um Oligomere zu bilden;
- ein zweites Stadium, in dem die gebildeten Oligomere im Vakuum bei einer Temperatur von 200 bis 275 °C geschüttelt werden, um den Polyester zu bilden;
* einen Schritt der Gewinnung des Polyesters am Ende des Polymerisationsschrittes.

14. Verfahren nach dem vorhergehenden Anspruch, **dadurch gekennzeichnet, dass** bezüglich der in den Reaktor eingeführten Gesamtheit der Monomer-Mole (A), (B), und (C) der Molanteil der Säure und/oder des Säure-Diesters (B) zwischen 25 und 45 % liegt.

15. Polyester, welcher gemäß dem Verfahren nach einem der Ansprüche 13 bis 14 gewonnen werden kann.

## Claims

1. A thermoplastic polyester comprising:
▪ at least one tetrahydrofuran-dimethanol diol unit (A);
▪ at least one furandicarboxylic acid unit (B);
▪ at least one aliphatic diol unit (C) other than the diol (A).

2. The polyester as claimed in the preceding claim, **characterized in that** it has a degree of crystallinity of less than 50%, advantageously less than 35%, said degree of crystallinity being determined as described in the specification.

3. The polyester as claimed in one of the preceding claims, **characterized in that** it has a weight-average molar mass of greater than 7500 g/mol, preferably greater than 10 000 g/mol, most preferentially greater than 20 000 g/mol, said weight-average molar mass being determined as described in the specification

4. The polyester as claimed in one of the preceding claims, wherein the aliphatic diol unit (C) is at least one unit chosen from linear aliphatic diols (C1), cycloaliphatic diols (C2), branched aliphatic diols (C3), or a mixture of these units.

5. The polyester as claimed in claim 4, wherein the aliphatic diol unit (C) is a linear aliphatic diol unit (C1) or a mixture of these units (C1).

6. The polyester as claimed in claim 4, wherein the aliphatic diol unit (C) is a cycloaliphatic diol unit (C2) or a mixture of these units (C2).

7. The polyester as claimed in claim 4, wherein the aliphatic diol unit (C) comprises at least one mixture of at least one linear aliphatic diol unit (C1) and of at least one cycloaliphatic diol unit (C2).

8. The polyester as claimed in one of claims 4, 5or 7, **characterized in that** it comprises at least one linear aliphatic diol unit (C1) chosen from ethylene glycol, 1,3-propanediol, 1,4-butanediol, 1,5-pentanediol, 1,6-hexanediol, 1,8-octanediol, 1,10-decanediol, or a mixture of aliphatic diol units comprising at least one of these units.

9. The polyester as claimed in one of claims 4, 5 or 7, **characterized in that** it comprises at least one linear aliphatic diol unit (C1) chosen from ethylene glycol and 1,4-butanediol, very preferentially ethylene glycol.

10. The polyester as claimed in one of claims 4, 5 or 7, wherein the cycloaliphatic diol unit (C2) comprises at least one unit chosen from the following units: 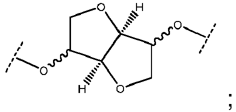 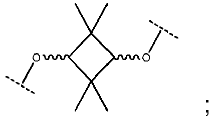 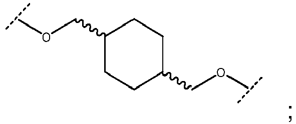 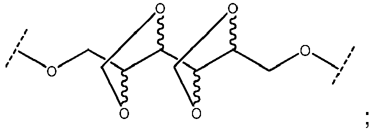 and

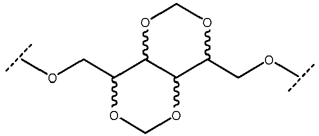

11. The polyester as claimed in claim 10, wherein the cycloaliphatic diol unit (C2) comprises at least one unit chosen from the following units: 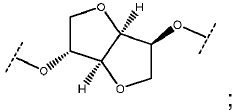 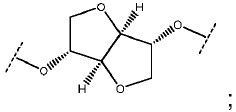 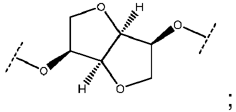 preferentially a unit:

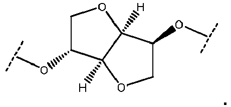

12. The polyester as claimed in one of the preceding claims, **characterized in that** the glass transition temperature is greater than or equal to 50°C, preferably greater than or equal to 60°C, said glass transition temperature being determined as described in the specification.

13. A process for producing thermoplastic polyester, **characterized in that** it comprises:
• a step of introducing, into a reactor, monomers comprising at least one tetrahydrofuran-dimethanol diol (A), at least one furandicarboxylic acid (B) and/or a diester of this acid and at least one aliphatic diol (C) other than the diol (A); and
• a step of polymerizing the monomers so as to form the polyester, comprising:
▪ a first stage during which the reaction medium is stirred at a temperature ranging from 140 to 210°C in order to form oligomers;
▪ a second stage during which the oligomers formed are stirred under vacuum, at a temperature ranging from 200 to 275°C in order to form the polyester;
• a step of recovering the polyester at the end of the polymerizing step.

14. The process as claimed in the preceding claim, **characterized in that**, relative to the total moles of monomers (A), (B) and (C) introduced into the reactor, the molar percentage of acid and/or of acid diester (B) ranges from 25% to 45%.

15. A polyester that can be obtained according to the process of either of claims 13 and 14.
